# EUROPEAN PATENT SPECIFICATION

(11) **EP 0 840 998 B1**
(45) Date of publication and mention of the grant of the patent: **05.02.2003**
(21) Application number: 97203424.3
(22) Date of filing: 05.11.1997
(51) Int. Cl.: A01D 34/64

(54) **Land mower with frontal plate-like mowing assembly**
Rasenmäher mit frontaler Schneideanordnung
Tondeuse à gazon à ensemble faucheur frontal

(30) Priority: 06.11.1996 IT VI960178
(43) Date of publication of application: 13.05.1998
(73) Proprietor: Caron, Paolo, 38051 Borgo Valsugana (Trento) (IT)
(72) Inventor: Caron, Paolo, 38051 Borgo Valsugana (Trento) (IT)
(74) Representative: O'Byrne, Daniel

(56) References cited:
- EP-A- 0 532 068
- EP-A- 0 800 759
- DE-A- 4 413 332
- DE-A- 19 527 152
- FR-A- 2 696 897
- US-A- 3 702 051
- US-A- 4 589 249
- US-A- 5 542 243
- PATENT ABSTRACTS OF JAPAN vol. 017, no. 259 (C-1061), 21 May 1993 & JP 05 003716 A (KUBOTA CORP), 14 January 1993

## Description

### Technical Field

The present invention relates to a lawn mower with a frontal plate-like mowing assembly, of the type which comprises a frame mounted on at least one pair of front driving wheels and at least one rear steering wheel, a frontal plate-like mowing assembly with a rotating blade, a container for gathering the cut grass, aspirating means for sucking the grass from the plate-like mowing assembly and for conveying it to said container, a motor operatively coupled to the driving wheels by means of transmission means comprising a differential-gear shift assembly.

### Background Art

From Italian Patent Application No. V196A000058, the disclosure of which is incorporated herein by reference, there is known a lawn mower of the type as indicated above, in which the differential-gear shift assembly is positioned above the driving wheels and connected thereto by means of a pair of substantially vertical chains or toothed belts.

Such lawn mower solves in a sufficient manner its assigned task, however it has various drawbacks which are susceptible to improvement.

In fact, the chain or belt connection of the differential-gear shift assembly to the driving wheels reduces the mechanical efficiency and increases the complexity and the number of components of the transmission.

Moreover, the differential-gear shift assembly is arranged in a relatively high position, higher than the motor, which elevates the centre of gravity of the lawn mower thereby reducing its stability.

Finally, the arrangement of the various parts of the transmission is relatively complex and is such as to reduce the accessibility to the various components of the lawn mower, with negative consequences both on the cost of assembly and maintenance.

US-A-4589249 discloses a lawn mower having most of the features mentioned in the preamble of the attached claim 1. However, the main power unit is operatively coupled to the driving wheels by means of two hydraulic motors and a plurality of pulleys and auxiliary shafts which are located in the upper portion of the machine thereby elevating its centre of gravity and reducing its stability.

A principle aim of the invention is to overcome the above described drawbacks, providing a machine of the type as defined above which is more stable, simple, reliable, and economical than those of the past.

A further aim is to provide a lawn mower which provides an optimal arrangement of the various components in a manner to assist its assembly, diminish its encumbrance, and lower its centre of gravity in order to maximise its stability during movement.

In accordance with a preferred aspect of the present invention, there is provided a lawn mower with a frontal plate-like mowing assembly, of the type defined above, having all the features mentioned in claim 1

The arrangement of the reduction unit between the driving wheels and its direct connection thereto reduces the complexity and cost of the machine, and moreover it improves the stability of the machine since its centre of gravity is lowered.

### Brief Description of the Drawings

Further characteristics and advantages will become more evident from the detailed description of some preferred by not exclusive embodiments of the lawn mower according to the invention, provided in an explanatory and non-limiting manner with the aid of the attached drawing sheets in which:
Figure 1 is a schematic lateral elevation view of a preferred embodiment of the lawn mower according to the invention, partially sectioned along a longitudinal vertical plane;
Figure 2 is a plan view of the machine of Figure 1, partially sectioned along the plane II-II;
Figure 3 is a front elevation view of the machine of Figure 1, partially sectioned along the plane III-III;
Figure 4 is a lateral elevation view of an alternative preferred embodiment of the lawn mower according to the invention, partially sectioned along a longitudinal vertical plane;
Figure 5 is a plan view of the machine of Figure 4, partially sectioned along the plane V-V;
Figure 6 is a front elevation view of the machine of Figure 4, partially sectioned along the plane VI-VI.

### Detailed Description of the Preferred Embodiments

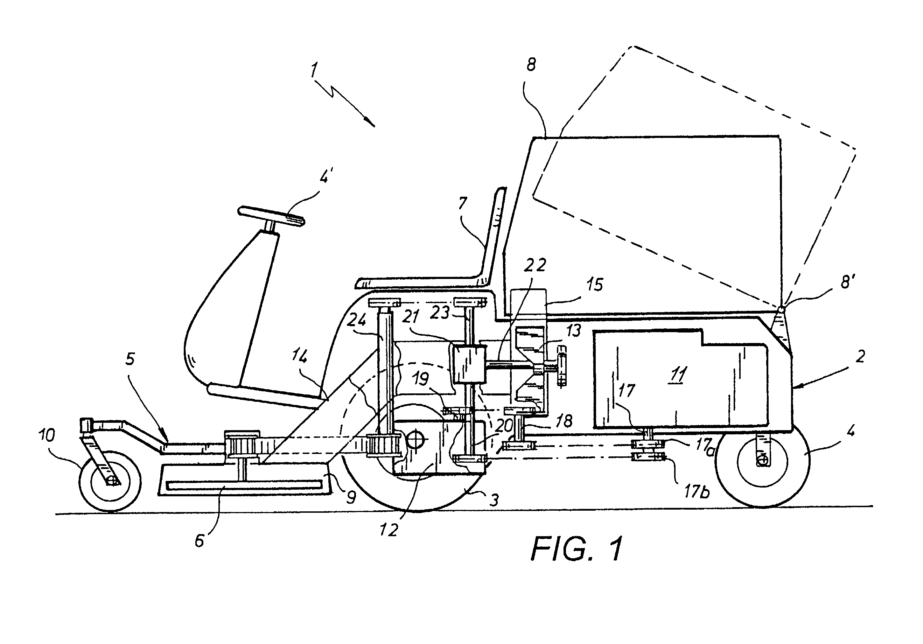

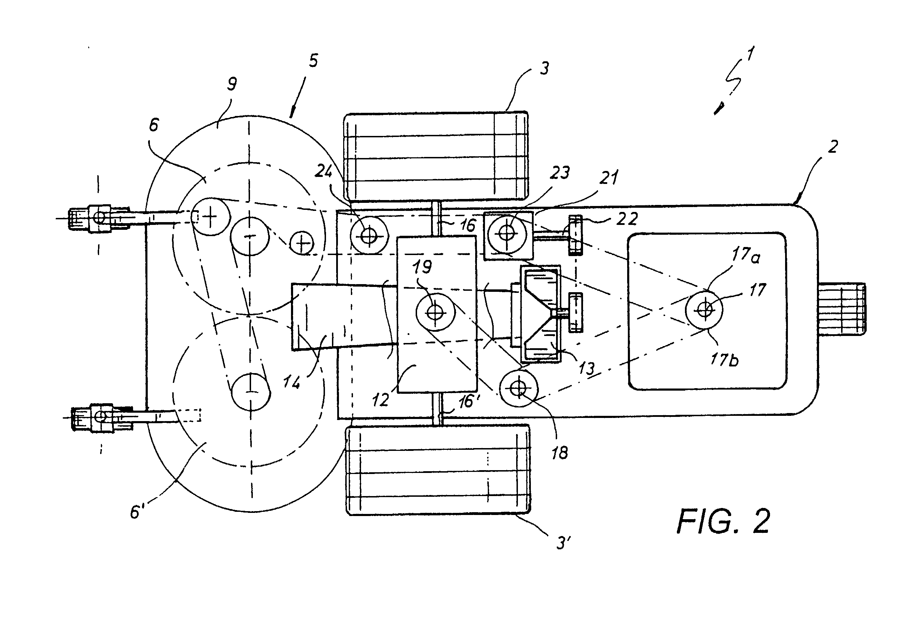

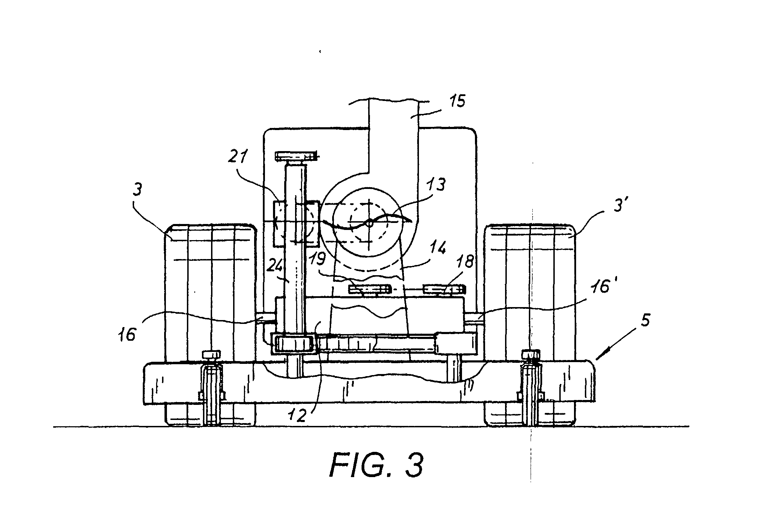

With specific reference to figures 1 to 3, the lawn mower according to the invention, generally indicated by the reference numeral 1, comprises a frame 2 mounted on a pair of lateral driving wheels 3, 3' and provided with a rear steering wheel 4 connected to the control steering wheel 4' by means of a per se known control means.

On the frame 2 there is mounted a frontal plate-like mowing assembly 5 provided with rotating blades 6, 6' having substantially vertical axes and being mutually connected by means for example of a transmission belt, a driving seat 7 substantially arranged above the space between the driving wheels 3, 3', and a container 8 for gathering the cut grass mounted in a tip-up manner rearwardly of the seat 7 about a substantially horizontal axis 8'.

The plate-like mowing assembly 5 is provided with a protection casing 9 which covers the rotating blades 6, 6' and is mounted in a cantilever manner to the front part of the frame so as to be adjustable in height in order to allow to vary the depth of cutting. If necessary, the plate-like mowing assembly may be supported by a pivoting front wheel 10.

For driving the machine there is provided a motor 11 of an electrical or internal combustion type, operatively connected the to the driving wheels 3, 3' by means of transmission means which- comprise a differential-gear shift assembly or axle 12, of a mechanical or hydraulic type, and with a continuous variation or stage jump in velocity, for example of the hydraulic type model lHT319-0750 produced and sold by the company Sauer Sundstrand.

There are also provided means for gathering the cut grass comprising a centrifugal rotor 13 connected to the casing 9 by means of a central front aspiration conduit 14 and connected to the container 8 by means of a tangential delivery conduit 15.

According to the invention, the differential-gear shift assembly 12 is arranged in a substantially central position in the space comprised between the driving wheels 3, 3' and is directly connected to these latter by means of respective rigid semi-axles 16, 16' optionally provided with elastic joints of a per se known type.

In this manner, the direct connection between assembly 12 and driving wheels 3, 3' eliminates the further belt and chain transmission parts present in various known similar machines, and avoids the application of restricted dimensional tolerances and brings about a lesser number of components, with a consequential increase in mechanical performance and in reliability of the machine.

Expediently, the differential-gear shift assembly 12 is located in a substantial axial position with respect to the driving wheels 3, in a manner to notably lower the centre of gravity of the machine and reduce the danger of tipping over.

In order to further improve the stability of the machine, the motor 11 is mounted on the frame below the container 8 and is arranged so that its drive shaft 17 is oriented substantially vertically downwardly.

Keyed on the drive shaft 17 is a first pulley or toothed crown 17a connected by belt or chain transmission means to a first substantially vertical auxiliary shaft 18 arranged in the lower part of the frame.

The auxiliary shaft 18 is arranged laterally to the centrifugal rotor 13 and is in turn connected by means of a belt or chain transmission system to the motion input shaft 19 of the reduction unit 12, which is also substantially vertical.

Keyed on the drive shaft 17 is a second pulley or toothed crown 17b connected by a second belt or chain transmission system to a second substantially vertical auxiliary shaft 20 which is also arranged laterally to the aspiration conduit 14 of the aspiration means but on the opposite side to the first auxiliary shaft 18 with respect to the longitudinal centre line of the machine.

The second auxiliary shaft 20 is connected to a reduction unit 21 having two exit shafts 22, 23 connected by belt of chain transmission parts, respectively, to the centrifugal rotor 13 and to the rotating blade 6 of the frontal plate-like mowing assembly 5 with the interposition of a third auxiliary shaft 24.

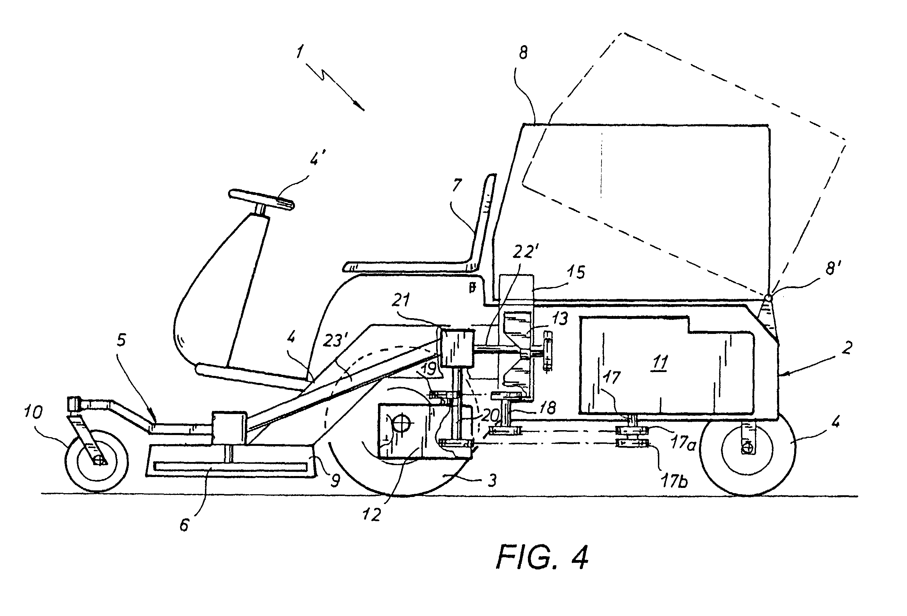

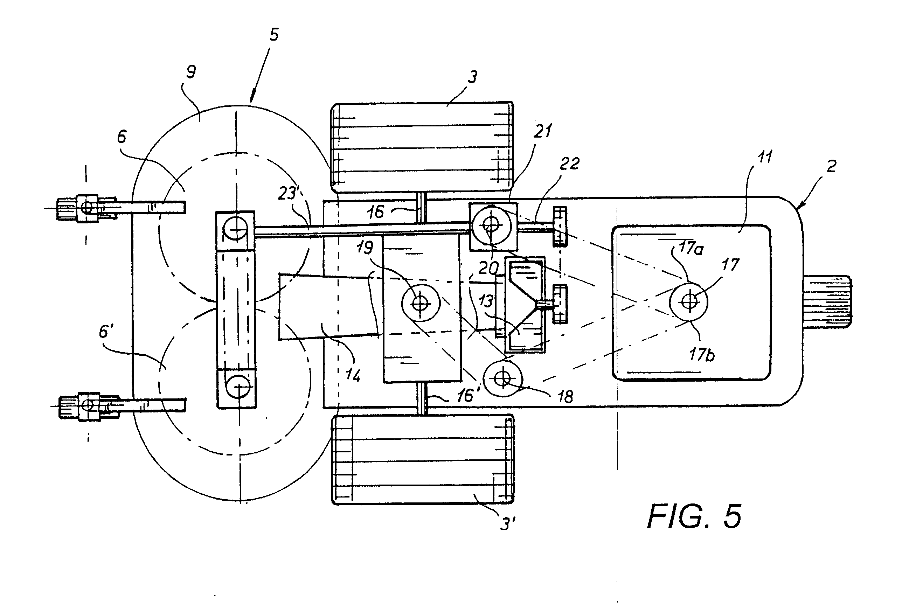

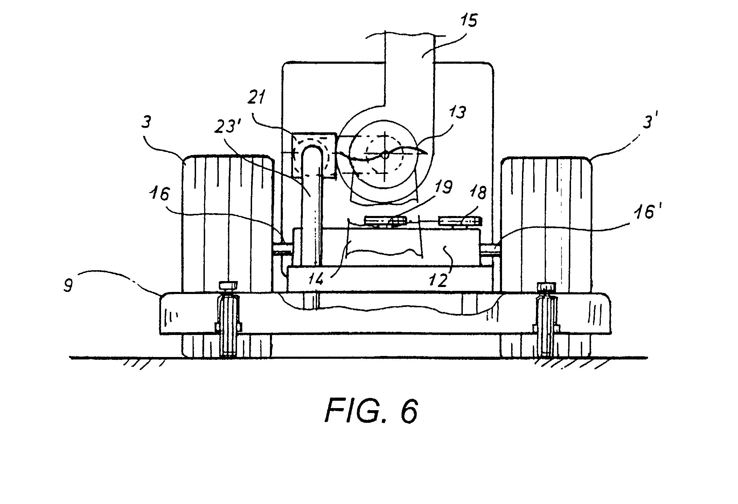

In the figures 4-6 an alternative embodiment is illustrated which differs from the preceding embodiment only for the arrangement of the kinematic chain downstream of the double exit reduction unit 21. In particular, the reduction unit 21 has an exit shaft 22' connected to the centrifugal rotor 13 and a universal shaft 23' connected to the blade 6 of the plate-like mowing assembly.

It is seen that the differential-gear shift assembly 12 and the two auxiliary shafts 18, 20 are in a position substantially below the motor 11 in a manner to lower the centre of gravity of the machine and to favour its stability.

From the foregoing it is possible to ascertain that the lawn mower according to the invention has achieved the prescribed aims and in particular the constructive simplicity, the optimal distribution as well as the weight of the parts, and the low centre of gravity which confers a notable stability to the machine even on rugged terrain, are emphasised.

The machine according to the invention is susceptible to numerous modifications and variations all of which fall within the inventive concept as defined in the accompanying claims and all of which are considered equally protected. All of the details may be substituted by technically equivalent elements; the materials and the dimensions may be any according to the requirements.

## Claims

1. Lawn mower with frontal plate-like mowing assembly, comprising a frame (2) mounted on at least one pair of front driving wheels (3, 3') and at least one rear steering wheel (4), a frontal plate-like mowing assembly (5) with rotating blades (6, 6'), a container (8) for gathering the cut grass, aspiration means for sucking the grass from said plate-like mowing assembly and for conveying it to said container, a motor (11) operatively coupled to said driving wheels (3, 3') by means of transmission means comprising a differential-gear shift assembly (12), **characterized in that** said differential-gear shift assembly (12) is arranged in a substantially central position in the space comprised between said driving wheels (3, 3') and is directly connected to said driving wheels (3, 3') by means of respective rigid semi-axes, said motor (11) having a drive shaft (17) which is connected to a motion input shaft (19) of said differential-gear shaft assembly (12) by means of a first auxiliary shaft (18) and to said plate-like mowing assembly (5) and to said aspiration means by means of a second auxiliary shaft (20), said differential-gear shift assembly (12) and said auxiliary shafts (18, 20) being mounted on said frame (2) laterally to said aspiration means on opposite site thereof in a position which is substantially below the motor (11) in such a manner to lower the centre of gravity of the machine and to enhance its stability.

2. Lawn mower according to claim 1, **characterised in that** said differential-gear shift assembly (12) is substantially coaxial to said pair of driving wheels (3, 3').

3. Lawn mower according to claim 1, **characterised in that** said rigid semi-axes (16, 16') are substantially horizontal.

4. Lawn mower according to claim 1, **characterised in that** said motor (11) is anchored to said frame (2) below said gathering container (8) with said drive shaft (17) oriented downwardly.

5. Lawn mower according to claim 1, **characterised in that** said first and said second auxiliary shafts (18, 20) are substantially vertical.

6. Lawn mower according to claim 1, **characterised in that** said aspiration means comprise a centrifugal rotor (13) which is connected to said plate-like mowing assembly (5) by means of a forward conduit (14) and to said removable container (8) by means of a rearward conduit (15).

7. Lawn mower according to claim 6, **characterised in that** said forward conduit (14) extends at least partially in a horizontal direction above said differential-gear shift assembly (12).

8. Lawn mower according to claim 7, **characterised in that** said second auxiliary shaft (20) is connected respectively to said centrifugal rotor (13) and to said rotating blades (6, 6') by means of an appropriate kinematic chain.

9. Lawn mower according to claim 8, **characterised in that** said kinematic chain comprises at least one angular reduction unit (21) having two exit shafts (22, 22', 23, 23') and connection parts.

10. Lawn mower according to claim 9, **characterised in that** said connection parts are of a chain or tooted belt or universal shaft type.

## Patentansprüche

1. Rasenmäher mit frontaler Schneideanordnung mit einem Rahmen (2), der an mindestens ein Paar vorderer Antriebsräder (3, 3') montiert ist und mit mindestens einem hinteren Lenkrad (4), einer frontalen Schneideanordnung (5) mit rotierenden Klingen (6, 6'), einem Behältnis (8) zum Aufsammeln des geschnittenen Gras, Ansaugeinrichtungen zum Ansaugen des Gras von der frontalen Schneideanordnung und zum Fördern in das Behältnis, einem Motor (11), der funktional verbunden ist mit den Antriebsrädern (3, 3') mittels Übertragungseinrichtungen, die eine Differentialgangschalteinheit (12) aufweisen, **dadurch gekennzeichnet, dass** die Differentialgangschalteinheit (12) in einer im wesentlichen senkrechten zentralen Stellung angeordnet ist in dem Raum, der zwischen den Antriebsrädern (3, 3') vorgesehen ist, und direkt verbunden ist mit den Antriebsrädern (3, 3') mittels jeweiliger steifer Halbachsen, wobei der Motor (11) eine Antriebswelle (17) aufweist, die verbunden ist mit einer Bewegungseingangswelle (19) der Differentialgangschalteinheit (12) mittels einer ersten Hilfswelle (18) und mit der frontalen Schneideanordnung (5) und mit den Ansaugeinrichtungen mittels einer zweiten Hilfswelle (20), wobei die Differentialgangschalteinheit (12) und die Hilfswellen (18, 20) an dem Rahmen (2) seitlich zu den Ansaugeinrichtungen an entgegengesetzten Seiten davon montiert sind in einer Stellung, die im wesentlichen unterhalb des Motors (11) ist auf eine Weise, dass der Schwerpunkt der Maschine abgesenkt und die Stabilität verbessert ist.

2. Rasenmäher gemäß Anspruch 1, **dadurch gekennzeichnet, dass** die Differentialgangschalteinheit (12) im wesentlichen koaxial ist zu dem Paar Antriebsräder (3, 3').

3. Rasenmäher gemäß Anspruch 1, **dadurch gekennzeichnet, dass** die steifen Halbachsen (16, 16') im wesentlichen horizontal sind.

4. Rasenmäher gemäß Anspruch 1, **dadurch gekennzeichnet, dass** der Motor an dem rahmen (2) unterhalb des Sammelbehältnis (8) befestigt ist, wobei die Antriebswelle (17) nach unten gerichtet ist.

5. Rasenmäher gemäß Anspruch 1, **dadurch gekennzeichnet, dass** die ersten und zweiten Hilfswellen (18, 20) im wesentlichen vertikal sind.

6. Rasenmäher gemäß Anspruch 1, **dadurch gekennzeichnet, dass** die Ansaugeinrichtungen einen zentrifugalen Rotor (13) aufweisen, der verbunden ist mit der frontalen Schneideanordnung (5) mittels einer nach vorn gerichteten Leitung (14) und mit dem entfernbaren Behältnis (8) mittels einer nach hinten gerichteten Leitung (15).

7. Rasenmäher gemäß Anspruch 6, **dadurch gekennzeichnet, dass** die nach vorn gerichtete Leitung (14) sich zumindest teilweise in horizontaler Richtung über der Differentialgangschalteinheit (12) erstreckt

8. Rasenmäher gemäß Anspruch 7, **dadurch gekennzeichnet, dass** die zweite Hilfswelle (20) jeweils verbunden ist mit dem zentrifugalen Rotor (13) und mit den rotierenden Klingen (6, 6') mittels einer geeigneten kinematischen Kette.

9. Rasenmäher gemäß Anspruch 8, **dadurch gekennzeichnet, dass** die kinematische Kette mindestens eine winklige Reduktionseinheit (21) umfaßt mit zwei Ausgangswellen (22, 22', 23, 23') und verbindenden Elementen.

10. Rasenmäher gemäß Anspruch 9', **dadurch gekennzeichnet, dass** die verbindenden Elemente aus einer Kette oder Zahnriemen oder allgemeinem Wellentyp sind.

## Revendications

1. Tondeuse à gazon à ensemble de coupe frontal de forme plate, comprenant un châssis (2) monté sur au moins une paire de roues avant motrices (3, 3') et au moins une roue arrière directrice (4), un ensemble de coupe frontal de forme plate (5) à lames tournantes (6, 6'), un récipient (8) destiné à collecter l'herbe coupée, des moyens d'aspiration destinés à aspirer l'herbe provenant dudit ensemble de coupe de forme plate et à la transporter audit récipient, un moteur (11) accouplé fonctionnellement audites roues motrices (3, 3') par des moyens de transmission qui comprennent un ensemble différentiel-changement de vitesse (12), **caractérisée en ce que** ledit ensemble différentiel-changement de vitesse (12) est agencé dans une position sensiblement centrale, dans l'espace compris entre lesdites roues motrices (3, 3') et est directement relié audites roues motrices (3, 3') au moyen de demi-arbres rigides respectifs, ledit moteur (11) comprenant un arbre de transmission (17) qui est relié à un arbre d'entrée de mouvement (19) du dit ensemble différentiel-changement de vitesse (12) à l'aide d'un premier arbre auxiliaire (18) et audit ensemble de coupe de forme plate (5), et audits moyens d'aspiration à l'aide d'un deuxième arbre auxiliaire (20), ledit ensemble différentiel-changement de vitesse (12) et lesdits arbres auxiliaires (18, 20) étant montés sur ledit châssis (2) latéralement par rapport audits moyens d'aspiration sur les deux côtés opposés de ces derniers, dans une position qui est sensiblement au-dessous du niveau du moteur (11) de manière à abaisser le centre de gravité de la machine et à améliorer sa stabilité.

2. Tondeuse à gazon selon la revendication 1, **caractérisée en ce que** ledit ensemble différentiel-changement de vitesse (12) est sensiblement coaxial à la dite paire de roues motrices (3, 3').

3. Tondeuse à gazon selon la revendication 1, **caractérisée en ce que** lesdits demi-arbres rigides (16, 16') sont sensiblement horizontaux.

4. Tondeuse à gazon selon la revendication 1, **caractérisée en ce que** ledit moteur (11) est ancré audit châssis (2) au-dessous dudit récipient collecteur (8), avec ledit arbre de transmission (17) orienté vers le bas.

5. Tondeuse à gazon selon la revendication 1, **caractérisée en ce que** ledit premier et ledit deuxième arbres auxiliaires (18, 20) sont sensiblement verticaux.

6. Tondeuse à gazon selon la revendication 1, **caractérisée en ce que** les dits moyens d'aspiration comprennent un rotor centrifuge (13) qui est relié audit ensemble de coupe de forme plate (5) à l'aide d'un conduit avant (14) et audit récipient amovible (8) à l'aide d'un conduit arrière (15).

7. Tondeuse à gazon selon la revendication 6, **caractérisée en ce que** ledit conduit avant (14) s'étend au moins partiellement dans une direction horizontale au-dessus dudit ensemble différentiel-changement de vitesse (12).

8. Tondeuse à gazon selon la revendication 7, **caractérisée en ce que** ledit deuxième arbre auxiliaire (20) est connecté respectivement audit rotor centrifuge (13) et audites lames tournantes (6, 6') à l'aide d'une chaîne cinématique appropriée.

9. Tondeuse à gazon selon la revendication 8, **caractérisé en ce que** ladite chaîne cinématique comprend au moins une unité réducteur à renvoi d'angle (21) comprenant deux arbres de sortie (22, 22', 23, 23') et des éléments de liaison.

10. Tondeuse à gazon selon la revendication 9, **caractérisée en ce que** lesdits éléments de liaison sont du type chaîne ou courroie crantée ou arbre universel.
